# EUROPEAN PATENT SPECIFICATION

(11) **EP 1 876 256 B1**
(45) Date of publication and mention of the grant of the patent: **18.01.2012**
(21) Application number: 06732467.3
(22) Date of filing: 28.04.2006
(51) Int. Cl.: C22C 38/60, C21D 1/06, C21D 1/10, C21D 9/32, C21D 9/40, C22C 38/00

(54) **CARBURIZED INDUCTION-HARDENED COMPONENT**
AUFGEKOHLTES INDUKTIONSGEHÄRTETES BAUTEIL
COMPOSANT CEMENTE TREMPE PAR INDUCTION

(30) Priority: 28.04.2005 JP 2005131201; 26.09.2005 JP 2005278105
(43) Date of publication of application: 09.01.2008
(73) Proprietor: Aisin AW Co., Ltd., Fujii-cho Anjo-shi, Aichi 444-1192 (JP); Nippon Steel Corporation, Tokyo 100-8071 (JP)
(72) Inventor: TANIGUCHI, Takao, Anjo-shi, Aichi 4441192 (JP); SHIRAI, Hisao, Anjo-shi, Aichi 4441192 (JP); OHBAYASHI, Kouji, Anjo-shi, Aichi 4441192 (JP); OKADA, Kazuaki, Anjo-shi, Aichi 4441192 (JP); KANISAWA, Hideo, Muroran City, Hokkaido 0508550 (JP); KOZAWA, Shuji, Muroran City, Hokkaido 0508550 (JP)
(74) Representative: Vossius & Partner
(86) International application number: PCT/JP2006/308964
(87) International publication number: WO 2006/118243

(56) References cited:
- WO-A1-03/056054
- JP-A- 9 287 644
- JP-A- 01 036 779
- JP-A- 05 148 535
- JP-A- 2003 193 137
- JP-A- 2004 124 127
- US-A1- 2003 205 297

## Description

### TECHNICAL FIELD

The present invention relates to a component for a mechanical structure, and more specifically relates to a component such as a gear that can be applied and used as a power transmission component in an automobile or the like, and which has little heat treatment distortion and high fatigue strength and toughness.

### BACKGROUND ART

A component for a mechanical structure, such as a gear or the like acting as a power transmission component in an automatic transmission, must have bending fatigue strength and toughness. Due to environmental issues, high dimensional accuracy has also been demanded in recent years in order to suppress noise during gear operation. In the past, generally, case-hardened steel such as JIS SCr420 and SCM420 were often used as material for the aforementioned gear. However, in the face of recent growing trends toward less noise and more strength in automotive components, conventional case-hardened steels are reaching their limit in terms of strength and dimensional accuracy and cannot fully meet such demands.

Carburized gears undergo almost no mechanical processing and are used as is following carburizing treatment, or used after undergoing only low-temperature tempering following carburizing treatment. As a consequence, heat treatment distortion due to carburizing and hardening remains, which becomes a cause of noise generation during operation.

Given such circumstances, a method has been proposed in Patent Document 1, for example, wherein steel containing, by mass, 0.30% to 0.60% C, is subjected to carburizing treatment to form a carburized layer. The steel is gradually cooled after the carburizing treatment, after which only the surface layer is subjected to induction hardening. According to this method, a core part (which hereinafter refers to a part not affected by induction hardening) is not subjected to quenching treatment, resulting in considerably less martensitic transformation and heat treatment distortion. However, the high C content leads to the problem of reduced toughness. Furthermore, the poor machinability of the material before carburizing treatment is also a problem.

Patent Document 1: Japanese Patent Application Publication No. JP-A-H08-311607

### DISCLOSURE OF THE INVENTION

### Problem to be Solved by the Invention

It is an object of the present invention to resolve the aforementioned problems with related art, and more specifically, to provide a carburized and induction-hardened component, which is a gear or other component that can be applied and used as a power transmission component in an automobile or the like, has little heat treatment distortion and high fatigue strength and toughness, and also has excellent material machinability prior to carburizing treatment.

### Means for Solving the Problem

The inventors gained the following knowledge regarding influences on fatigue strength, toughness, heat treatment distortion and the like as a result of extensive research into problems with the related art on performing carburizing treatment and then gradual cooling, after which only a surface layer is subjected to induction-hardening treatment. The invention is given by the claims.
(1) A material with excellent machinability at the material stage and excellent toughness after carburizing and gradual cooling can be achieved by setting the amount of C in the material to a minimum of 0.8% and under 0.3% by mass, and including other components in appropriate amounts.
(2) By appropriately controlling cooling conditions after carburizing treatment, a core structure can be obtained that has excellent toughness, little heat treatment distortion, and whose core hardness has excellent bending fatigue strength.

According to the invention, it is possible to provide a carburized and induction-hardened component, which is a gear or other component that can be applied and used as a power transmission component in an automobile or the like, has little heat treatment distortion and high fatigue strength and toughness, and also has excellent material machinability prior to carburizing treatment. Thus, the present invention can greatly contribute to increasing output, reducing noise and the like in an automobile.

### BRIEF DESCRIPTION OF THE DRAWINGS

FIG. 1 is a plane view of a ring gear according to an embodiment;
FIG. 2 is a cross-sectional view of the ring gear according to the embodiment (a cross-sectional view taken along a line A-A in FIG. 1);
FIG. 3 is a plane view of a differential ring gear according to the embodiment; and
FIG. 4 is a cross-sectional view of the differential ring gear according to the embodiment (a cross-sectional view taken along a line A-A in FIG. 3).

### BEST MODES FOR CARRYING OUT THE INVENTION

Explanations are given below regarding reasons for limiting alloy elements in the three aspects of the present invention described above.

### C: minimum 0.08%, under 0.3%

Carbon is an element added in order to ensure the strength of a core part in particular. Hence, in the present invention, the lower limit of the C content was set to 0.08% to ensure the strength of the interior. However, an amount of 0.3% or more results in increased hardness, which leads to less toughness as well as worse material machinability. Therefore, the upper limit was set to under 0.3%. It is most preferable that C be added in the amount of 0.2 to 0.3%.

### Si: maximum 2.0% (including 0%)

Silicon need not be added. If added, improving the temper softening resistance of the hardened layer has the effect of improving the pitching life of the gear, for example. To obtain such an effect, the Si content is preferably 0.2% or more. However, if the amount of Si added is in excess of 2.0%, this results in deterioration of the carburizing property, and thus 2.0% was set as the upper limit. It is preferable that Si be added in the amount of 0.2 to 0.6%, and most preferably 0.4 to 0.6%.

### Mn:1.3 to 3.0%

Manganese is an effective element for improving hardenability, and also for improving temper softening resistance. To obtain such an effect, the amount of Mn added must be at least 0.2%. If 1.3% or more is added, then the bainite surface area ratio of the core structure can be set to 70% or more depending on the cooling speed after the carburizing treatment described later, and the improved hardness compared to when less than 1.3% is added is also preferable. However, if the amount of Mn added is in excess of 3.0%, this creates a martensite structure in the core structure that generates increased distortion, and thus 3.0% was set as the upper limit. It is most preferable that Mn be added in the amount of 1.4 to 2.0%.

### P: maximum 0.03%

Phosphorous causes grain boundary segregation that lowers toughness, and the amount added should be minimized to the greatest possible extent. Therefore, it is necessary to limit the amount of P added to 0.03% or less.

### S: 0.005 to 0.05%

Sulfur must be included in the amount of at least 0.005% from the standpoint of machinability. Hence, in the present invention, the lower limit of the S content was set to 0.005%. However, if the amount of S added is in excess of 0.05%, this inhibits forgeability, and thus 0.05% was set as the upper limit. It is most preferable that S be added in the amount of 0.01 to 0.02%.

### Ni: maximum 2.0% (including 0%)

Nickel need not be added. Adding Ni has the effect of improving hardenability. To obtain such an effect, it is preferable that the amount of Ni added is at least 0.2%. However, if the amount of Ni added is in excess of 2.0%, this creates a martensite structure in the core structure that generates increased distortion, and thus 2.0% was set as the upper limit.

### Cr: maximum 3.0% (including 0%)

Chromium need not be added. If added, improving the temper softening resistance of the hardened layer has the effect of improving the pitching life of the gear. To obtain such an effect, the Cr content is preferably 0.5% or more. However, if the amount of Cr added is in excess of 3.0%, Cr type carbides are generated on the component surface during carburizing, resulting in deteriorated hardenability. Thus, 3.0% was set as the upper limit. It is preferable that Cr be added in the amount of 0.2 to 0.6%, and most preferably 0.4 to 0.6%.

### Mo: maximum 1.0% (including 0%)

Molybdenum need not be added. Adding molybdenum has the effects of toughening the hardened layer and improving bending fatigue strength. To obtain such effects, the Mo content is preferably 0.01% or more. However, even if the amount of Mo added is in excess of 1.0%, such effects do not become further enhanced, and is therefore unnecessary from an economical standpoint. It is preferable that the upper limit of Mo added is in the amount of 0.4%, and more preferably 0.1 % or less, or 0.3 to 0.4%.

### O: maximum 0.0025%

Oxygen is present in steel as an oxide inclusion of alumina, titania or the like. A large O content increases the size of these oxides, which can result in damage to the power transmission component. Therefore, O must be limited to 0.0025% or less. The smaller the amount, the better, and in particular, 0.0020% or less is preferred in cases of application to components that require a contact fatigue characteristic, while 0.0015% or less is preferred in cases that place an emphasis on long life.

### N: 0.005% to 0.03%

Nitrogen has the effect of preventing coarsening of the austenite structure during carburizing treatment and during induction-hardening treatment by forming various nitrides. Therefore, the Ni content must be at least 0.005%. However, if the amount of Ni added is in excess of 0.03%, forgeability is significantly inhibited, and thus 0.03% was set as the upper limit. It is most preferable that N be added in the amount of 0.005 to 0.02%.

### Al: 0.005 to 0.05%, Ti: 0.005 to 0.05%, (either or both)

Aluminum and titanium have the effect of preventing coarsening of the austenite structure during carburizing treatment and during induction-hardening treatment through deposition and scattering throughout steel as nitrides. The respective contents of either or both Al and Ti must be at least 0.005%. However, if the amount added is in excess of 0.05%, the deposition coarsens and results in brittle steel. Thus, 0.05% was set as the upper limit. It is most preferable that Al is added in the amount of 0.005 to 0.05%.

### V: maximum 0.3% (including 0%), Nb: maximum 0.3% (including 0%), (either or both)

Vanadium and niobium need not be added, but their addition lowers the bainite transformation temperature during gradual cooling after carburizing treatment, increases toughness using bainite as the microstructure, and strengthens steel through partial deposition as carbonitrides during gradual cooling. To take advantage of such effects, the respective contents of either or both V and Nb must be at least 0.01%. However, even if the amount added is in excess of 0.3%, such effects do not become further enhanced, and is therefore unnecessary from an economical standpoint. Thus, 0.3% was set as the upper limit. It is preferable that V is added in the amount of 0.01 to 0.3%, and most preferably in the amount of 0.05 to 0.25%.

Next, in the first to third aspects of the present invention described above, it is preferable that the steel chemical components contain at least one or more selected from the group consisting of, by mass, Ca: maximum 0.01%, Mg: maximum 0.01%, Zr: maximum 0.05%, and Te: maximum 0.1%.

These are elements that, for example, suppress MnS elongation and further improve bending fatigue strength with respect to bending fatigue cracks of the gear and fatigue cracks at the spline base of axial parts. Namely, to gain the MnS elongation suppression effect, the steel should contain at least one or more selected from the group consisting of, by mass, Ca: maximum 0.01%, Mg: maximum 0.01%, Zr: maximum 0.05%, and Te: maximum 0.1%. However, including these elements in excess of the above amounts does not further enhance the effect and is therefore unnecessary from an economical standpoint. Thus, the above amounts are set as upper limits.

Explanations are given below regarding reasons for limiting the component hardness and structure.
Any carburized and induction-hardened component according to the present invention is subjected to carburizing treatment and then induction-hardening treatment. By performing the carburizing treatment and the induction-hardening treatment, the hardness of the surface layer is at least 55 HRC and the hardness of the core part is from 20 to 50 HRC. The hardness of the surface layer (hereinafter, a surface layer whose depth extends 50 µm from the surface) must be at least 55 HRC from the standpoints of bending fatigue strength and pitching strength. The hardness of the core part must be at least 20 HRC because this influences bending fatigue strength: the harder the core part, the more bending fatigue strength is improved. However, the bending fatigue strength does not improve any further once the hardness of the core part exceeds 50 HRC, and in some cases the bending fatigue strength may even decrease. Hence, in the present invention, the hardness of the core part was set from 20 to 50 HRC. In order to achieve a hardness of 20 to 50 HRC in the core part, it is necessary to use steel material with appropriate hardenability. More specifically, in following a hardenability test method (end quenching test method) of G0561 steel, steel material whose hardness is in the range from 20 to 50 HRC at a distance of 25 mm from the hardened end may be used, and a component formed from such steel material may be cooled at a cooling speed of 4 to 10°C per second after undergoing carburizing treatment.

In addition, the carburized and induction-hardened component according to the present invention does not have a martensite structure in the metal structure of the core part. The metal structure of the core part has an austenite structure during carburizing treatment, which transforms thereafter due to gradual cooling into a ferrite, pearlite, bainite, or martensite structure. The martensite structure experiences larger transformation expansion compared to the ferrite, pearlite, and bainite structures. Therefore, the martensite structure must not occur, since this will increase distortion from heat treatment. To ensure that the martensite structure does not occur, the cooling speed after carburizing treatment may be set to 10°C per second or less, in addition to using the steel component of the present invention.

Furthermore, it is especially necessary that the surface area ratio of the bainite structure among the metal structure of the core part be at least 70%. In other words, a 70% surface ratio for the bainite structure among the metal structure of the core part is preferable in terms of toughness. To achieve this, the amount of Mn included may be set to 1.3 to 3.0%, and cooling performed at a cooling speed of 4 to 10°C per second after carburizing treatment. Here, a cooling speed exceeding 10°C per second is not preferable because a martensite structure occurs and increases distortion. Performing induction-hardening treatment thereafter to harden only the surface layer is essential. However, performing induction-hardening that also hardens the interior of the component is not preferable because of increased distortion.

The surface carbon amount is preferably 0.5 to 1.5 mass%. The carbon amount influences the hardness of the surface layer, and it is therefore necessary to adjust the carbon amount of the surface layer using appropriate carburizing conditions. If the surface carbon amount is under 0.5 mass%, then the problem of insufficient surface layer hardness occurs regardless of subsequent induction-hardening. Meanwhile, if the surface carbon amount exceeds 1.5 mass%, this also leads to the problem of insufficient surface layer hardness due to more deposition of carbides and significantly lowered base hardenability. Hence, in the present invention, the surface carbon amount was set to 0.5 to 1.5 mass%. The method of carburizing treatment is not particularly limited, and may be performed in accordance with any normal method.

The depth of the induction-hardened layer is preferably 0.3 to 2.0 times the depth of the carburized layer. Increasing the depth of the induction-hardened layer improves bending fatigue strength, and therefore hardening up to a depth that is 0.3 times the total hardness depth during carburizing treatment is required. However, if the depth of the hardened layer exceeds 2.0 times the total hardness depth, this results in decreased bending fatigue strength rather than further improvement. Hence, in the present invention, the depth of the induction-hardened layer was set to 0.3 to 2.0 times the depth of the carburized layer. Any normal method may be used as the method for heating by induction.

The surface area ratio of residual austenite in the induction-hardened layer is preferably no greater than 20%. The cooling medium used in induction-hardening should be water or a water-based hardening agent. Thus, the cooling speed increases with respect to general carburizing treatment, and the residual austenite surface area ratio can be reduced to 20 % or less. Achieving such low residual austenite makes it possible, for example, to suppress the change to martensite caused by treatment-induced transformation and reduce distortion, regardless of whether shot peening treatment is performed thereafter.

The depth of surface grain boundary oxidation is preferably no greater than 3 µm. The grain boundary oxide layer has less strength than the general carburized and induction-hardened layers. If the depth of the generated grain boundary oxide layer exceeds 3 µm, this may lead to insufficient strength in the component. To ensure that the grain boundary oxide layer does not go over 3 µm, the carburizing treatment may preferably be performed under a reduced-pressure atmosphere where the pressure has been reduced to 1 to 30 hPa. With regard to the carburizing treatment, if normal gas carburizing treatment is performed, oxidizing gas (CO₂ and H₂O included in the gas creates a grain boundary oxide layer on the surface of the component, which is accompanied by the formation of an imperfect quenched structure (troostite). For this reason, surface hardness is lowered and fatigue strength also falls, mating vacuum carburizing treatment preferable. Grain boundary oxidation can be adequately prevented by performing vacuum carburizing under a reduced-pressure atmosphere of 1 to 30 hPa. Here, a reduced-pressure value of less than 1 hPa for the aforementioned reduced-pressure atmosphere is excessive with respect to suppressing oxidation, and requires high reduced-pressure specifications of the apparatus used for reducing pressure, which is unnecessary from an economical standpoint. Meanwhile, a reduced-pressure value exceeding 30 hPa is also accompanied by problems such as a lowered oxidation suppression effect and the generation of soot inside the carburizing furnace. In addition, the carburizing treatment is preferably performed under an atmosphere whose main component is inert gas. In this case as well, the oxidation suppression atmosphere described above can be easily formed. As inert gases, nitrogen gas, argon gas, helium gas and the like may be used, for example. Even with normal gas carburizing treatment, it is possible to suppress the grain boundary oxide layer by setting Si to under 0.05%.

Following the induction-hardening treatment above, shot peening treatment is preferably performed. By performing the shot peening treatment after the induction-hardening treatment, the bending fatigue strength of carburized and induction-hardened components in particular can be further improved compared to cases where only induction-hardening is performer.

The above carburized and induction-hardened component may be a gear. In other words, the above carburized and induction-hardened component has the strength characteristics required of automotive drive train components, and is extremely suited for application as a gear in an automatic transmission, for example.

### Examples

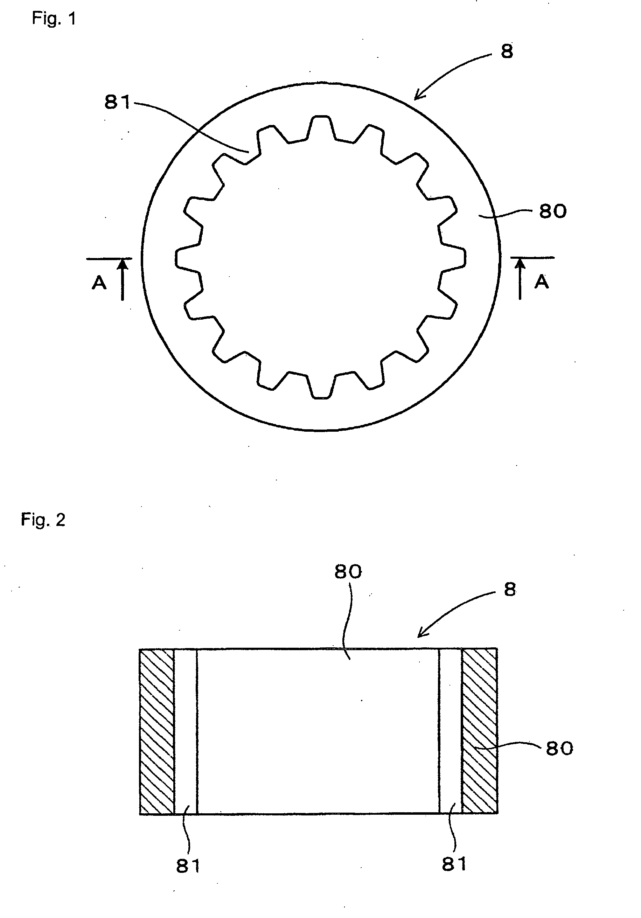

The present invention will be explained in detail below using examples. Note that these examples are used for the purpose of describing the present invention and do not limit the scope of the present invention.
Hot-rolled material having the chemical components shown in Table 1 was subjected to hot forging and then annealing treatment. Machining was then performed to produce Ono type rotating-bending fatigue test specimens having φ9 mm plane portions and half-circle notches with 1.14 mm radii. In similar fashion, U-notch impact test specimens (JIS Z 2202, FIG. 2a) and ring gears for measuring gear distortion (pitch diameter: φ157 mm, module: 2.45, number of teeth: 51, inner diameter: φ86 mm) were also produced.

Next, the test specimens and ring gears were divided and processed according to three manufacturing methods (methods 1 to 3).
Method 1: This method consists of carburizing treatment for 30 min at 950°C under a 20 hPa reduced-pressure atmosphere; gradual cooling at the cooling speeds shown in Table 2; induction-hardening treatment at 100 kHz and 950°C; and tempering for 90 min at 150°C. However, the ratio of the carburizing period and the diffusion period during carburizing is individually adjusted because the surface C concentration is divided as shown in Table 3. Likewise, the heating time is individually adjusted because the depth of the induction-hardened layer is divided as shown in Table 2.

Method 2: Following the tempering for 90 min at 150°C in method 1, shot peening treatment using an arc height of 1.0 mmA was also performed.

Method 3: Instead of performing carburizing treatment for 30 min at 950°C under a reduced-pressure atmosphere according to method 1, gas carburizing treatment is performed for 30 min at 950°C and a carbon potential of 0.6%.

The test specimens and ring gears processed according to the above methods were then tested and measured.
Material machinability was evaluated, and a passing grade was given to those materials with which gear cutting of one ring gear was achieved without the normally required hob blade replacement. The fatigue strength of the Ono type rotating-bending fatigue test specimens was measured as having a fatigue limit of 10⁶ cycles. For the U-notch impact test specimens, the impact value at normal temperature was measured. The distortion of the ring gears was evaluated and the thickness of each tooth was measured according two the over pin method of JIS B 1752 after carburizing, based on which a passing grade was given to those showing a difference of 50 µm or less between the largest dimension and the smallest dimension. The tests and measurement results are shown in Table 3.

As Table 3 shows, test specimens from test nos. 1 to 15 of the invention examples and the ring gears had good material machinability and passing grades for gear distortion. These also showed excellent high impact values of 12 J/cm² or more and bending fatigue strengths of 650 MPa or more.
Even higher impact values were seen for test nos. 12 to 15 of the invention examples containing 1.3 to 3.0% Mn and whose core parts had a bainite ratio of 70% or more.
For test no. 6 of the invention examples, gas carburizing treatment according to method 3 was performed and Si was included in the amount of 0.03%. A grain boundary oxidation depth of 3 µm was thus obtained, thereby achieving the present invention.

In comparison, test no. 16 of the comparative examples had poor ring gear distortion. This can be attributed to the creation of a martensite structure in the deep structure caused by cooling at a speed over 10°C per second after carburizing.
Test no. 17 of the comparative examples had a low fatigue strength of 480 MPa. This can be attributed to the hardness of the core part falling below 20 HRC, due to cooling at a speed under 4°C per second after carburizing.
Test no. 18 of the comparative examples had a low bending fatigue strength of 450 MPa. This can be attributed to the depth of the induction-hardened layer exceeding two times the depth of the carburized layer.
Test no. 19 of the comparative examples had a low bending fatigue strength of 460 MPa. This can be attributed two the hardness of the surface layer falling below 55 HRC due to the surface carbon concentration rising above 1.5%.

Test no. 20 of the comparative examples had a low bending fatigue strength of 500 MPa. This can be attributed to performing gas carburizing treatment according to method 3 and including Si in the amount of 0.26%. As a consequence, the grain boundary oxidation depth exceeded 3 µm.
Test no. 21 of the comparative examples had poor material machinability, and it was necessary to replace the hob blade partway through the production of one ring gear. The impact value was also low at 6 J/cm². This can be attributed to the hardness of the core part exceeding 50 HRC due to the C in the steel material exceeding 0.3%.

Test no. 22 of the comparative examples had poor ring gear distortion. This can be attributed to the creation of a martensite structure in the deep structure due to more than 3% Mn.
Test no. 23 of the comparative examples had a low bending fatigue strength of 460 MPa. After testing, fish-eye fractures were observed originating from oxide inclusions in the Ono type rotating-bending fatigue test specimen. This was most likely caused by an increase in the size of the oxide inclusions due to the O content exceeding 0.0025%.

Table 1

**(Table 1)**

| Test No. | Category | Chemical Composition (mass%) | | | | | | | | | | | | | | |
|---|---|---|---|---|---|---|---|---|---|---|---|---|---|---|---|---|
| | | C | Si | Mn | P | S | Ni | Cr | MO | O | N | Al | Ti | V | Nb | Other |
| 1 | ex * | 0.20 | 0.25 0.73 | | 0.020 | 0.015 | - | 1.05 | - | 0.0012 | 0.012 | 0.030 | - | - | - | - |
| 2 | ex * | 0.29 | 0.21 | 0.74 | 0.018 | 0.016 | - | 1.06 | - | 0.0010 | 0.012 | 0.030 | - | - | 0.02 | - |
| 3 | ex * | 0.20 | 0.25 | 0.73 | 0.030 | 0.015 | - | 1.04 | 0.22 | 0.0013 | 0.011 | 0.031 | - | - | - | - |
| 4 | ex * | 0.19 | 0.26 | 0.55 | 0.020 | 0.015 | 1.80 | 0.53 | 0.21 | 0.0011 | 0.012 | 0.030 | - | - | - | Ca:0.0020 |
| 5 | ex * | 0.08 | 0.25 | 0.74 | 0.019 | 0.014 | - | 1.05 | 0.75 | 0.0024 | 0.012 | 0.031 | - | - | - | Mg: 0.0008 |
| 6 | ex * | 0.20 | 0.03 | 0.73 | 0.020 | 0.015 | - | 1.06 | 0.20 | 0.0012 | 0.012 | 0.028 | - | - | - | Zr: 0.0022 |
| 7 | ex * | 0.21 | 1.96 | 0.73 | 0.021 | 0.049 | - | 1.05 | - | 0.0012 | 0.012 | 0.030 | - | - | - | - |
| 8 | ex * | 0.20 | 0.25 | 0.21 | 0.020 | 0.015 | - | 1.04 | 0.50 | 0.0011 | 0.029 | 0.048 | - | - | - | - |
| 9 | ex * | 0.20 | 0.26 | 0.73 | 0.018 | 0.015 | 2.00 | 1.06 | - | 0.0015 | 0.012 | 0.029 | - | - | - | - |
| 0 | ex * | 0.19 | 0.25 | 0.74 | 0.020 | 0.015 | - | 2.96 | - | 0.0012 | 0.011 | 0.030 | - | - | - | - |
| 11 | ex * | 0.20 | 0.24 | 0.73 | 0.020 | 0.016 | - | 0.50 | 0.98 | 0.0009 | 0.012 | 0.031 | - | - | - | Te:0.0053 |
| 12 | Invention ex * | 0.24 | 0.50 | 1.85 | 0.008 | 0.015 | - | 0.50 | - | 0.0008 | 0.018 | 0.032 | - | 0.12 | - | - |
| 13 | ex * | 0.28 | 0.26 | 2.991 | 0.020 | 0.015 | - | 1.05. | - | 0.0011 | 0.012 | 0.001 | 0.032 | - | - | - |
| 14 | Invention ex. | 0.24 | 0.51 | 1.85 | 0.011 | 0.016 | - | 0.50 | 0.03 | 0.0008 | 0.012 | 0.040 | - | 0.10 | - | - |
| 15 | Invention ex. | 0.24 | 0.50 | 1.84 | 0.010 | 0.015 | - | 0.50 | 0.39 | 0.0007 | 0.012 | 0.040 | - | 0.10 | - | - |
| 16 | Comparative ex. | 0.20 | 0.24 | 0.73 | 0.022 | 0.014 | - | 1.05 | - | 0.0012 | 0.012 | 0.029 | - | - | - | - |
| 17 | Comparative ex. | 0.20 | 0.24 | 0.73 | 0.022 | 0.014 | - | 1.05 | - | 0.0011 | 0.012 | 0.029 | - | - | - | - |
| 18 | Comparative ex. | 0.21 | 0.25 | 0.73 | 0.021 | 0.016 | - | 1.06 | - | 0.0012 | 0.011 | 0.030 | - | - | - | - |
| 19 | Comparative ex. | 0.20 | 0.26 | 0.74 | 0.020 | 0.015 | | 1.05 | - | 0.0013 | 0.012 | 0.029 | - | - | - | - |
| 20 | Comparative ex. | 0.20 | 0.26 | 0.74 | 0.020 | 0.015 | - | 1.05 | - | 0.0011 | 0.012 | 0.029 | - | - | - | - |
| 21 | Comparative ex. | 0.45 | 0.25 | 0.73 | 0.020 | 0.015 | - | 1.05 | 0.22 | 0.0009 | 0.012 | 0.031 | - | - | - | - |
| 22 | Comparative ex. | 0.21 | 0.25 | 3.05 | 0.020 | 0.015 | - | 1.04 | - | 0.0012 | 0.012 | 0.030 | - | - | - | - |
| 23 | Comparative ex | 0.24 | 0.50 | 1.80 | 0.011 | 0.015 | - | 0.50 | 0.03 | 0.0027 | 0.011 | 0.035 | - | 0.11 | - | - |

| | | | | | | | | | | | | | | | | |
|---|---|---|---|---|---|---|---|---|---|---|---|---|---|---|---|---|
| * Comparative | | | | | | | | | | | | | | | | |

Table 2

**(Table 2)**

| Test No. | Category | Method | Cooling Speed After Carburizing | A: Carburinzing Layer Depth (mm) | B: Induction- Hardened Layer depth (mm) | B/A |
|---|---|---|---|---|---|---|
| 1 | Invention ex. | Method 1 | 10°C/s | 0.5 | 0.80 | 1.6 |
| 2 | Invention ex. | Method 1 | 4°C/s | 0.7 | 0.80 | 1.1 |
| 3 | Invention ex. | Method 1 | 5°C/s | 0.5 | 0.15 | 0.3 |
| 4 | Invention ex. | Method 1 | 5°C/s | 0.5 | 1.00 | 2.0 |
| 5 | Invention ex. | Method 1 | 5°C/s | 0.4 | 0.80 | 2.0 |
| 6 | Invention ex | Method 3 | 5°C/s | 0.5 | 0.80 | 1.6 |
| 7 | Invention ex. | Method 1 | 5°C/s | 0.5 | 0.80 | 1.6 |
| 8 | Invention ex. | Method 1 | 7°C/s | 0.5 | 0.80 | 1.6 |
| 9 | Invention ex. | Method 1 | 5°C/s | 0.5 | 0.80 | 1.6 |
| 10 | Invention ex. | Method 1 | 5°C/s | 0.5 | 0.80 | 1.6 |
| 11 | Invention ex. | Method 1 | 5°C:/s | 0.5 | 0.80 | 1.6 |
| 12 | Invention ex. | Method 1 | 5°C/s | 0.6 | 0.80 | 1.3 |
| 13 | Invention ex. | Method 1 | 5°C/s | 0.7 | 0.80 | 1.1 |
| 14 | Invention ex. | Method 2 | 5°C/s | 0.6 | 0.80 | 1.3 |
| 15 | Invention ex. | Method 2 | 5°C/s | 0.6 | 0.80 | 1.3 |
| 16 | Comparative ex. | Method 1 | 15°C/s | 0.5 | 0.80 | 1.6 |
| 17 | Comparative ex. | Method 1 | 3°C/s | 0.5 | 0.80 | 1.6 |
| 18 | Comparative ex. | Method 1 | 5°C/s | 0.5 | 1.20 | 2.4 |
| 19 | Comparative ex. | Method 1 | 5°C/s | 0.5 | 0.80 | 1.6 |
| 20 | Comparative ex. | method 3 | 5°C/s | 0.5 | 0.80 | 1.6 |
| 21 | Comparative ex. | Method 1 | 5°C/s | 0.7 | 0.80 | 1.1 |
| 22 | Comparative ex. | Method 1 | 5°C/s | 0.5 | 0.80 | 1.6 |
| 23 | Comparative ex. | Method 2 | 5°C/s | 0.6 | 0.80 | 1.3 |

Table 3

**(Table 3)**

| Test No. | Category | Grain Boundary Oxidation Depth (mm) | Surface C Concentration (%) | Residual Austenite Amount Amount (%) | Surface Layer Hardness (HRC) | Core Hardness (HRC) | Structure of Core Part | Material Machin- ability | Distortion | Impact (J/cm²) | Bending Fatigue Value Strength (MPa) |
|---|---|---|---|---|---|---|---|---|---|---|---|
| | ex. * | 0 | 0.6 | 3 | 65 | 20 | Ferrite/pearlite | Good | Pass | 17 | 650 |
| 2 | ex. * | 0 | 0.6 | 8 | 65 | 26 | Ferrite/pearlite | Good | Pass | 12 | 660 |
| 3 | ex. * | 0 | 0.5 | 9 | 55 | 26 | Ferrite/pearlite | Good | Pass | 17 | 650 |
| 4 | ex. * | 0 | 0.6 | 8 | 65 | 21 | Ferrite/pearlite | Good | Pass | 25 | 650 |
| 5 | ex. * | 0 | 0.6 | 7 | 65 | 21 | Ferrite/pearlite | Good | Pass | 30 | 660 |
| 6 | ex. * | 0 | 0.6 | 8 8 | 65 65 | 23 23 | Ferrite/pearlite | Good | Pass | 20 | 650 |
| 7 | ex. * | 0 | 1.5 | 19 | 65 | 30 | Ferrite/pearlite | Good | Pass | 12 | 660 |
| 8 | ex. * | 0 | 0.6 | 7 | 65 | 24 | Ferrite/pearlite | Good | Pass | 21 | 650 |
| 9 | ex. * | 0 | 0.6 | 9 | 65 | 26 | Ferrite/pearlite | Good | Pass | 24 | 650 |
| 10 | ex. * | 0 | 0.6 | 16 | 65 | 31 | Bainite 60%, ferrite 40% | Good | Pass | 23 | 650 |
| 11 | ex. * | 0 | 0.6 | 9 | 65 | 32 | Bainite 60%, ferrite 40% | Good | Pass | 30 | 660 |
| 12 | Invention ex. 0 | 0 | 0.6 | 15 | 56 | 35 | Bainite 80%, ferrite 20% | Good | Pass | 44 | 680 |
| 13 | ex. * | 0 | 0.6 | 20 | 65 | 50 | Bainite 90%, ferrite 10% | Good | Pass | 42 | 660 |
| 14 | invention ex. | 0 | 0.6 | 0 | 67 | 36 | Bainite 90%, ferrite 10% | Good | Pass | 43 | 700 |
| 15 | Invention ex. | 0 | 0.6 | 0 | 67 | 37 | Bainite 90%, ferrite 10% | Good | Pass | 45 | 710 |
| 16 | Comparative ex. | 0 | 0.6 | 3 | 65 | 28 | Martensite/bainite/ferrite | Good | Fail | 12 | 650 |
| 17 | Comparative ex. 0 | 0 | 0.6 | 3 | 65 | 19 | Bainite 60%, ferrite 40% | Good | Pass | 13 | 480 |
| 18 | Comparative ex. | 0 | 0.6 | 4 | 65 | 20 | Ferrite/pearlite | Good | Pass | 17 | 450 |
| i9 | Comparative ex. | 0 | 1.6 | 19 | 54 | 20 | Ferrite/pearlite | Good | Pass | 15 | 460 |
| 20 | Comparative ex. | 10 | 0.6 | 3 | 65 | 20 | Ferrite/pearlite | Good | Pass | 15 | 500 |
| 21 | Comparative ex. | 0 | 0.6 | 17 | 65 | 51 | Ferrite/pearlite | Poor | Pass | 6 | 650 |
| 22 | Comparative ex. | 0 | 0.6 | 20 | 65 | 46 | Martensite/bainite/ferrite | Good | Fail | 42 | 650 |
| 23 | Comparative ex. | 0 | 0.6 | 0 | 67 | 36 | Bainite 90%, ferrite 10% | Good | Pass | 42 | 460 |

| | | | | | | | | | | | |
|---|---|---|---|---|---|---|---|---|---|---|---|
| * Comparative | | | | | | | | | | | |

Next, examples of specific parts to which the carburized and induction-hardened component according to the present invention is applicable will be illustrated. For example, FIGS. 1 and 2 show the form of a ring gear 8 that may also be used as the ring gear in the tests described above. The ring gear 8 is a component that is employed in the automatic transmission of an automobile, and has a cylindrical body portion 80 with tooth surfaces 81 provided on an inner peripheral surface thereof. Furthermore, the tooth surface has a high degree of hardness, and circularity is extremely important.

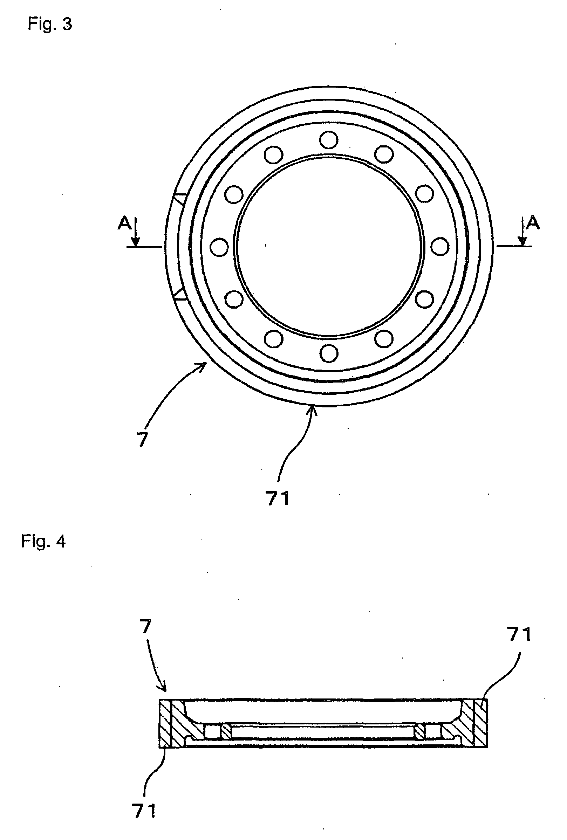

In addition, FIGS. 3 and 4 show how the present invention is also applicable to a ring-shaped differential ring gear 7, which has a ring-shaped body portion 70 and tooth surfaces 71 on an outer peripheral side thereof. The differential ring gear 7 is also a component that is employed in the automatic transmission of an automobile. Furthermore, the tooth surface has a high degree of hardness, and circularity is extremely important.
Note that the present invention is not particularly limited to the example of gears given here, and is applicable to gears of various forms. Note further that the present invention is not particularly limited to gear applications and is naturally applicable to various steel parts such as power transmission components in automobiles.

## Claims

1. A carburized and induction-hardened component subjected to carburizing treatment and then induction-hardening treatment, and formed from steel consisting of, by mass,
C: minimum 0.08% and under 0.3%;
Si: maximum 2.0% (including 0%);
Mn: from 1.3% to 3.0%;
P: maximum 0.03%;
S: from 0.005% to 0.05%;
Ni: maximum 2.0% (including 0%);
Cr: maximum 3.0% (including 0%);
Mo: maximum 1.0% (including 0%);
O: maximum 0.0025%; and
N: from 0.005% to 0.03%; and
further comprising either or both of, by mass,
Al: from 0.005% to 0.05%, and
Ti: from 0.005% to 0.05%; and
still further comprising either or both of, by mass,
V: from 0.01% to 0.3%, and
Nb: from 0.01% to 0.3%; and
the residual portion comprises Fe and unavoidable impurities,
the carburized and induction-hardened component **characterized in that**
the hardness of a surface layer is at least 55 HRC and the hardness of a core part is from 20 to 50 HRC and, **in that** a depth of an induction-hardened layer is from 0.3 to 2.0 times a depth of carburized layer and
a metal structure of the core part does not include a martensite structure and a surface area ratio of a bainite structure is at least 70%.

2. A carburized and.induction-hardened component subjected to carburizing treatment and then induction-hardening treatment, and formed from steel consisting of, by mass,
C: minimum 0.2% and under 0.3%;
Si: from 0.2% to 0.6%;
Mn: from 1.4% to 2.0%;
P: maximum 0.03%;
S: from 0.01% to 0.02%;
Cr: from 0.2% to 0.6%;
Mo: maximum 0.4% (including 0%);
O: maximum 0.0025%;
N: from 0.005% to 0.02%;
Al: from 0.005% to 0.05%;
V: from 0.05% to 0.25%; and
the residual portion comprises Fe and unavoidable impurities,
the carburized and induction-hardened component **characterized in that**
the hardness of a surface layer is at least 55 HRC and the hardness of a core part is from 20 to 50 HRC and **in that** a depth of an induction-hardened layer is from 0.3 to 2.0 times a depth of a carburized layer, and
a metal structure of the core part does not include a martensite structure and a surface area ratio of a bainite structure is at least 70%.

3. The carburized and induction-hardened component according to claim 2, **characterized in that**
the steel chemical components consist of, by mass, Si: from 0.4% to 0.6%, Cr: from 0.4% to 0.6%, and Mo: maximum 0.1% (including 0%).

4. The carburized and induction-hardened component according to claim 2, **characterized in that**
the steel chemical components consist of, by mass, Si: from 0.4% to 0.6%, Cr: from 0.4% to 0.6%, and Mo: from 0.3 to 0.4%.

5. The carburized and induction-hardened component according to any one of claims 1 to 4, **characterized in that**
the steel chemical components further contain at least one or more selected from the group consisting of, by mass, Ca: maximum 0.01%, Mg: maximum 0.01%, Zr: maximum 0.05%, and Te: maximum 0.1%, added at the expense of
iron.

6. The carburized and induction-hardened component according to any one of claims 1 to 5, **characterized in that**
a surface carbon amount is from 0.5 to 1.5% by mass.

7. The carburized and induction-hardened component according to any one of claims, 1 to 6, **characterized in that**
a surface area ratio of residual austenite in the induction-hardened layer is no greater than 20%.

8. The carburized and induction-hardened component according to any one of claims 1 to 7, **characterized in that**
a surface grain boundary oxidation depth is no greater than 3 µm.

9. The carburized and induction-hardened component according to any one of claims 1 to 8, **characterized in that**
the carburized and induction-hardened component is subjected to shot peening treatment after the induction-hardening treatment.

10. The carburized and induction-hardened component according to any one of claims 1 to 9, **characterized in that**
the carburized and induction-hardened component is a gear.

11. The carburized and induction-hardened component according to any one of claims 2 to 10, subjected to carburizing treatment and then cooling at a cooling speed of 4 to 10 deg. C per second and then induction-hardening treatment.

12. The carburized and induction-hardened component according to any one of claims 2 to 11, **characterized in that** the hardness of a core part is from 35 to 50 HRC.

## Patentansprüche

1. Aufgekohltes und induktionsgehärtetes Bauteil, das einer Aufkohlungsbehandlung und dann einer Induktionshärtungsbehandlung unterzogen wurde und aus Stahl besteht, der die folgende Zusammensetzung in Massenprozent aufweist:
C: minimal 0,08% und unter 0,3%;
Si: maximal 2,0% (einschließlich 0%);
Mn: von 1,3% bis 3,0%;
P: maximal 0,03%;
S: von 0,005% bis 0,05%;
Ni: maximal 2,0% (einschließlich 0%);
Cr: maximal 3,0% (einschließlich 0%);
Mo: maximal 1,0% (einschließlich 0%);
O: maximal 0,0025%; und
N: von 0,005% bis 0,03%;
desweiteren
A1: von 0,005% bis 0,05%, und/oder
Ti: von 0,005% bis 0,05%;
desweiteren
V: von 0,01% bis 0,3%, und/oder
Nb: von 0,01% bis 0,3%;
mit Fe und unvermeidbaren Verunreinigungen als Rest,
wobei das aufgekohlte und induktionsgehärtete Bauteil **dadurch gekennzeichnet ist, dass** die Härte einer Oberflächenschicht mindestens 55HRC beträgt und die Härte eines Kernteils zwischen 20 und 50HRC beträgt und eine Tiefe einer induktionsgehärteten Schicht das 0,3 bis 2,0fache einer Tiefe einer aufgekohlten Schicht ist, und
eine Metallstruktur des Kernteils keine Martensitstruktur aufweist und ein Oberflächenanteil einer Bainitstruktur mindestens 70% beträgt.

2. Aufgekohltes und induktionsgehärtetes Bauteil, das einer Aufkohlungsbehandlung und dann einer Induktionshärtungsbehandlung unterzogen wurde und aus Stahl besteht, der die folgende Zusammensetzung in Massenprozent aufweist:
C: minimal 0,2% und unter 0,3%;
Si: von 0,2% bis 0,6%;
Mn: von 1,4% bis 2,0%;
P: maximal 0,03%;
S: von 0,01% bis 0,02%;
Cr: von 0,2% bis 0,6%;
Mo: maximal 0,4% (einschließlich 0%);
O: maximal 0,0025%;
N: von 0,005% bis 0,02%;
Al: von 0,005% bis 0,05%;
V: von 0,05% bis 0,25%;
mit Fe und unvermeidbaren Verunreinigungen als Rest,
wobei das aufgekohlte und induktionsgehärtete Bauteil **dadurch gekennzeichnet ist, dass** die Härte einer Oberflächenschicht mindestens 55HRC beträgt und die Härte eines Kernteils zwischen 20 und 50HRC beträgt und eine Tiefe einer induktionsgehärteten Schicht das 0,3 bis 2,0 fache einer Tiefe einer aufgekohlten Schicht ist, und
eine Metallstruktur des Kernteils keine Martensitstruktur aufweist und ein Oberflächenanteil einer Bainitstruktur mindestens 70% beträgt.

3. Aufgekohltes und induktionsgehärtetes Bauteil nach Anspruch 2, **dadurch gekennzeichnet, dass** der Stahl die folgenden chemischen Komponenten in Massenprozent aufweist:
Si: von 0,4% bis 0,6%, Cr: von 0,4% bis 0,6% und Mo: maximal 0,1% (einschließlich 0%).

4. Aufgekohltes und induktionsgehärtetes Bauteil nach Anspruch 2, **dadurch gekennzeichnet, dass** der Stahl die folgenden chemischen Komponenten in Massenprozent aufweist:
Si: von 0,4% bis 0,6%, Cr: von 0,4% bis 0,6% und Mo: von 0,3% bis 0,4%.

5. Aufgekohltes und induktionsgehärtetes Bauteil nach einem der Ansprüche 1 bis 4, **dadurch gekennzeichnet, dass** der Stahl eine oder mehrere auf Kosten von Eisen hinzugefügte chemische Komponenten aus der folgenden Gruppe aufweist (in Massenprozent):
Ca: maximal 0,01%, Mg: maximal 0,01%, Zr: maximal 0,05% und Te: maximal 0,1%.

6. Aufgekohltes und induktionsgehärtetes Bauteil nach einem der Ansprüche 1 bis 5, **dadurch gekennzeichnet, dass** eine Menge an Oberflächenkohlenstoff zwischen 0,5 und 1,5 Massenprozent beträgt.

7. Aufgekohltes und induktionsgehärtetes Bauteil nach einem der Ansprüche 1 bis 6, **dadurch gekennzeichnet, dass** ein Oberflächenanteil von Restaustenit in der induktionsgehärteten Schicht nicht mehr als 20% beträgt.

8. Aufgekohltes und induktionsgehärtetes Bauteil nach einem der Ansprüche 1 bis 7, **dadurch gekennzeichnet, dass** eine Tiefe einer Oberflächenkorngrenzenoxidation nicht mehr als 3µm beträgt.

9. Aufgekohltes und induktionsgehärtetes Bauteil nach einem der Ansprüche 1 bis 8, **dadurch gekennzeichnet, dass** nach der Induktionshärtungsbehandlung das aufgekohlte und induktionsgehärtete Bauteil einer Kugelstrahlbehandlung unterzogen wird.

10. Aufgekohltes und induktionsgehärtetes Bauteil nach einem der Ansprüche 1 bis 9, **dadurch gekennzeichnet, dass** das aufgekohlte und induktionsgehärtete Bauteil ein Zahnrad ist.

11. Aufgekohltes und induktionsgehärtetes Bauteil nach einem der Ansprüche 2 bis 10, das einer Aufkohlungsbehandlung und dann einem Kühlschritt bei einer Kühlgeschwindigkeit von 4 bis 10 Grad Celsius pro Sekunde und dann einer Induktionshärtungsbehandlung unterzogen wurde.

12. Aufgekohltes und induktionsgehärtetes Bauteil nach einem der Ansprüche 2 bis 11, **dadurch gekennzeichnet, dass** die Härte eines Kernteils von 35 bis 50HRC beträgt.

## Revendications

1. Constituant cémenté et trempé par induction soumis à un traitement de cémentation et ensuite à un traitement de trempe par induction, et formé à partir d'acier constitué, en masse, de
C : minimum 0,08 % et moins de 0,3 % ;
Si : maximum 2,0 % (incluant 0 %) ;
Mn : de 1,3 % à 3,0 % ;
P : maximum 0,03 % ;
S : de 0,005 % à 0,05 % ;
Ni : maximum 2,0 % (incluant 0 %) ;
Cr : maximum 3,0 % (incluant 0 %) ;
Mo : maximum 1,0 % (incluant 0 %) ;
O : maximum 0,0025 % ; et
N : de 0,005 % à 0,03 % ; et
comprenant de plus soit l'un, soit les deux, en masse, de Al : de 0,005 % à 0,05 %, et
Ti : de 0,005 % à 0,05 % ; et
comprenant encore de plus soit l'un, soit les deux, en masse, de
V : de 0,01 % à 0,3 %, et
Nb : de 0,01 % à 0,3 % ; et
la portion résiduelle comprend Fe et des impuretés inévitables, le constituant cémenté et trempé par induction est **caractérisé en ce que**
la dureté d'une couche de surface est d'au moins 55 HRC et la dureté d'une partie de noyau est de 20 à 50 HRC et **en ce qu'**une profondeur d'une couche trempée par induction est de 0,3 à 2,0 fois une profondeur d'une couche cémentée, et
une structure de métal de la partie de noyau n'inclut pas une structure de martensite et un rapport de surface spécifique d'une structure de bainite est d'au moins 70 %.

2. Constituant cémenté et trempé par induction soumis à un traitement de cémentation et ensuite à un traitement de trempe par induction, et formé à partir d'acier constitué, en masse, de
C : minimum 0,2 % et moins de 0,3 % ;
Si : de 0,2 % à 0,6 % ;
Mn : de 1,4 % à 2,0 % ;
P : maximum 0,03 % ;
S : de 0,01 % à 0,02 % ;
Cr : de 0,2 % à 0,6 % ;
Mo : maximum 0,4 % (incluant 0 %) ;
O : maximum 0,0025 % ;
N : de 0,005 % à 0,02 % ;
Al : de 0,005 % à 0,05 %,
V: de 0,05% à 0,25%, et
la portion résiduelle comprend Fe et des impuretés inévitables, le constituant cémenté et trempé par induction est **caractérisé en ce que**
la dureté d'une couche de surface est d'au moins 55 HRC et la dureté d'une partie de noyau est de 20 à 50 HRC et une profondeur d'une couche trempée par induction est de 0,3 à 2,0 fois une profondeur d'une couche cémentée, et
une structure de métal de la partie de noyau n'inclut pas une structure de martensite et un rapport de surface spécifique d'une structure de bainite est d'au moins 70 %.

3. Constituant cémenté et trempé par induction selon la revendication 2, **caractérisé en ce que** les constituants chimiques de l'acier sont constitués, en masse, de Si : de 0,4 % à 0,6 %, de Cr : de 0,4 % à 0,6 %, et de Mo : maximum 0,1 % (incluant 0 %).

4. Constituant cémenté et trempé par induction selon la revendication 2, **caractérisé en ce que** les constituants chimiques de l'acier sont constitués, en masse, de Si : de 0,4 % à 0,6 %, de Cr : de 0,4 % à 0,6 %, et de Mo : de 0,3 à 0,4 %.

5. Constituant cémenté et trempé par induction selon l'une quelconque des revendications 1 à 4, **caractérisé en ce que** les constituants chimiques de l'acier contiennent de plus au moins un ou plusieurs choisis dans le groupe constitué, en masse, de Ca : maximum 0,01 %, Mg : maximum 0,01 %, Zr : maximum 0,05 % et Te : maximum 0,1 %, ajoutés aux dépens du fer.

6. Constituant cémenté et trempé par induction selon l'une quelconque des revendications 1 à 5, **caractérisé en ce que**
une quantité de carbone en surface est de 0,5 à 1,5 % en masse.

7. Constituant cémenté et trempé par induction selon l'une quelconque des revendications 1 à 6, **caractérisé en ce qu'**un taux de surface spécifique d'austénite résiduelle dans la couche trempée par induction est d'au plus 20 %.

8. Constituant cémenté et trempé par induction selon l'une quelconque des revendications 1 à 7, **caractérisé en ce qu'**une profondeur d'oxydation de limite de grains de surface est d'au plus 3 µm.

9. Constituant cémenté et trempé par induction selon l'une quelconque des revendications 1 à 8, **caractérisé en ce que** le constituant cémenté et trempé par induction est soumis à un traitement de grenaillage après le traitement de trempe par induction.

10. Constituant cémenté et trempé par induction selon l'une quelconque des revendications 1 à 9, **caractérisé en ce que** le constituant cémenté et trempé par induction est un engrenage.

11. Constituant cémenté et trempé par induction selon l'une quelconque des revendications 2 à 10, soumis à un traitement de cémentation et ensuite à un refroidissement à une vitesse de refroidissement de 4 à 10°C par seconde et ensuite à un traitement de trempe par induction.

12. Constituant cémenté et trempé par induction selon l'une quelconque des revendications 2 à 11, **caractérisé en ce que** la dureté d'une partie de noyau est de 35 à 50 HRC.
